# EUROPÄISCHE PATENTSCHRIFT

(11) **EP 1 912 729 B1**
(45) Veröffentlichungstag und Bekanntmachung des Hinweises auf die Patenterteilung: **26.05.2010**
(21) Anmeldenummer: 06776651.9
(22) Anmeldetag: 07.08.2006
(51) Int. Cl.: B01F 13/00, B01F 3/08, B01F 5/04, B01F 5/06, B01J 19/00

(54) **BILDUNG EINER EMULSION IN EINEM FLUIDISCHEN MIKROSYSTEM**
FORMATION OF AN EMULSION IN A FLUID MICROSYSTEM
FORMATION D'UNE EMULSION DANS UN MICROSYSTEME FLUIDIQUE

(30) Priorität: 08.08.2005 DE 102005037401
(43) Veröffentlichungstag der Anmeldung: 23.04.2008
(73) Patentinhaber: Max-Planck-Gesellschaft zur Förderung der Wissenschaften e.V., 80539 München (DE)
(72) Erfinder: HERMINGHAUS, Stephan, 37083 Göttingen (DE); SEEMANN, Ralf, 37083 Göttingen (DE); PRIEST, Craig, Athelstone 5076 South Australia (AU)
(74) Vertreter: Hertz, Oliver
(86) Internationale Anmeldenummer: PCT/EP2006/007799
(87) Internationale Veröffentlichungsnummer: WO 2007/017230

(56) Entgegenhaltungen:
- EP-A2- 0 051 463
- WO-A-02/38262
- WO-A-2006/082351
- WO-A1-01/85297
- WO-A2-02/16017
- US-A1- 2004 228 882
- EHRFELD W ET AL: "Microreactors" MICROREACTORS : NEW TECHNOLOGY FOR MODERN CHEMISTRY, WEINHEIM : WILEY, 2000, Seiten 44-46,80, XP002190806 ISBN: 3-527-29590-9

## Beschreibung

Die Erfindung betrifft ein Verfahren zur Bildung einer Emulsion in einem fluidischen Mikrosystem, wobei aus mindestens zwei verschiedenen Flüssigkeiten in einem Dispersionsbereich des Mikrosystems eine kontinuierliche und mindestens eine dispergierte Phase der Emulsion erzeugt werden. Des Weiteren betrifft die Erfindung ein fluidisches Mikrosystem, das mit mindestens einem Dispersionsbereich zur Bildung der Emulsion ausgestattet ist. Die Erfindung betrifft ferner ein Verfahren zur Bearbeitung einer Emulsion in einem fluidischen Mikrosystem, wobei Tropfen einer dispergierten Phase unter der Wirkung eines elektrischen Feldes fusioniert werden. Die Erfindung betrifft auch eine Fusionseinrichtung zur Fusion von dispergierten Tropfen mittels Elektrokoaleszenz.

Es ist allgemein bekannt, die fluidische Mikrosystemtechnik insbesondere für chemische, biochemische, pharmazeutische oder medizinische Untersuchungen anzuwenden. Ein fluidisches Mikrosystem enthält Kanäle oder Hohlräume mit typischen Querschnittsdimensionen im Sub-mm-Bereich, durch die Flüssigkeiten strömen können. Im Mikrosystem können die Flüssigkeiten oder in diesen suspendierte Partikel physikalischen oder chemischen Behandlungen oder Messungen unterzogen werden. Eine besondere Eigenschaft fluidischer Mikrosysteme besteht darin, dass wegen der geringen Querschnittsdimensionen die Strömungen typischerweise laminar und wirbelfrei sind so dass eine gezielte Steuerung der Strömungen ermöglicht wird. Ein wichtiger Vorteil, insbesondere für chemische Anwendungen ("labon-a-chip") ist durch den geringen Substanzverbrauch bei der Anwendung der Mikrosystemtechnik gegeben.

Als neuer Zweig der fluidischen Mikrosystemtechnik hat sich die sog. digitale Mikrofluidik entwickelt, bei der eine Flüssigkeit im Mikrosystem nicht aus einzelnen Phasen, sondern aus mehreren, voneinander abgegrenzten Phasen (Kompartimente) bestehen. Die kompartimentierte Flüssigkeit bildet eine Dispersion (Emulsion) aus zwei oder mehreren, sich im Mikrosystem nicht vermischenden Flüssigkeiten. Die Anwendung der kompartimentierten Flüssigkeiten hat den besonderen Vorteil, dass der Substanzverbrauch nochmals vermindert werden kann, indem z. B. ein bestimmter Reaktionspartner nur in wenigen Tröpfchen einer dispergierten Phase der Emulsion enthalten ist. Ein weiterer Vorteil besteht in der vollständigen Verhinderung einer axialen Dispersion in der kompartimentierten Flüssigkeit (siehe z.B. H. Song et al. in "Angew. Chem." Bd. 792, 2003, S. 1145).

Es sind verschiedene Techniken zur Bildung von Emulsionen in fluidischen Mikrosystemen bekannt, die sich durch den Mechanismus der Erzeugung und Verteilung von Tropfen der dispergierten Phase in einer kontinuierlichen Phase unterscheiden. Bei der sog. Jet-Technik (siehe z. B. Y-C. Tan et al. in "LabChip", Bd. 4, 2004, S. 292-298) strömt eine zunächst einphasige Flüssigkeit, die nach der Emulsionsbildung die dispergierte Phase bilden soll, mit einer hohen Geschwindigkeit in eine Umgebungsflüssigkeit, die nach der Emulsionsbildung die kontinuierliche Phase bilden soll. Dabei entsteht ein von der Umgebung abgegrenzte Flüssigkeitsstrahl, der durch die sog. Rayleigh-Instabilität nach einer vorbestimmten Strahllänge in einzelne Tropfen zerfällt. Nachteile der Jet-Technik bestehen darin, dass sie nicht ohne Weiteres im Mikrosystem im laufenden Betrieb ("on-line") realisiert werden kann, sondern die Erzeugung der Emulsion außerhalb des Mikrosystems ("off-line") erfordert. Des Weiteren bestehen Nachteile, da durch den schnell strömenden Flüssigkeitsstrahl ein hoher Substanzverbrauch und eine geringe Steuerbarkeit der Emulsionsbildung gegeben sind. Bei der Scher-Technik (siehe T. Thorsen et al. in "Phys. Review Letters", Bd. 86, 2001, S. 4163-4166) wird die Emulsion an einem T-förmigen Verbindungsstück von zwei Kanälen (englisch: T-Junction) gebildet. Die zu dispergierende Phase wird am T-Verbindungsstück seitlich in die geradlinig strömende kontinuierliche Phase gedrückt, wobei die Emulsion durch einen regelmäßigen Schervorgang am T-Verbindungsstück gebildet wird. Die Scher-Technik weist Nachteile dahingehend auf, dass die Monodispersität der erzeugten Tropfen und die Möglichkeit, Emulsionen mit einem geringem Volumenanteil der kontinuierlichen Phase zu erzeugen, eingeschränkt sind.

In fluidischen Mikrosystemen ist nicht nur die Erzeugung von Dispersionen, sondern auch die gezielte Fusion von Dispersionstropfen von Interesse, um bspw. chemische Reaktionen von Reaktionspartnern in benachbarten Tropfen auszulösen. Es ist bekannt, Dispersionstropfen unter der Wirkung eines elektrischen Feldes zu fusionieren (sog. Elektrokoaleszenz). Beispielsweise wird von J. und G. Kralj et al. in "Lab Chip", Bd. 5, 2005, S. 531, und in WO 2006/027757 die Elektrokoaleszenz unter Verwendung von Elektroden in einem fluidischen Mikrosystem beschrieben. Die Elektroden sind mit einem bestimmten Abstand in Längsrichtung eines Kanals des Mikrosystems angeordnet. Wenn sich dispergierte Tropfen im Abstand zwischen den Elektroden befinden, können die Tropfen durch die Beaufschlagung der Elektroden mit einer Fusionsspannung fusioniert werden. Die herkömmlichen Techniken haben aufgrund der folgenden Nachteile eine beschränkte Anwendbarkeit. Erstens sind zur Tropfenfusion relativ hohe Spannungen, teilweise im kV-Bereich erforderlich. Damit sind Probleme bei der Ansteuerung der Elektroden und durch eine nachteilige Beeinflussung der Dispersion durch das hohe elektrische Feld verbunden. Wenn bspw. sensitive Makromoleküle, wie z. B. biologische Makromoleküle in benachbarten Tropfen zur Reaktion gebracht werden sollen, können die Makromoleküle im Hochspannungsfeld beschädigt werden. Ein weiterer Nachteil besteht in der beschränkten Selektivität der Tropfenfusion, die typischerweise eine unbestimmte Vielzahl von Tropfen in dem Abstand zwischen den Elektroden einschließt.

Weitere fluidische Mikrosysteme werden in WO 02/16017 A2, EP 0 051 463 A2, WO 01/85297 A1 und WO 02/38262 A und in der Publikation von W. Ehrfeld et al. in "Microreactors" (Microreactors: New Technology for Modern Chemistry, Weinheim: Wiley, 2000, S. 44-46) beschrieben.

Die Aufgabe der Erfindung ist es, ein verbessertes Verfahren zur Bildung einer Emulsion in einem fluidischen Mikrosystem bereitzustellen, mit dem die Nachteile der herkömmlichen Techniken überwunden werden und das insbesondere geeignet ist, mit einer hochgradigen Monodispersität und/oder einer erhöhten Variabilität wenigstens einen der Parameter Tropfengröße, Tropfenzusammensetzung, Volumenverhältnis der kontinuierlichen und dispergierten Phasen und räumliche Anordnung der Tropfen der dispergierten Phase einzustellen. Des Weiteren soll das Verfahren in einem fluidischen Mikrosystem, insbesondere im laufenden Betrieb des Mikrosystems ("on-line") anwendbar sein. Die Aufgabe der Erfindung ist es auch, ein verbessertes fluidisches Mikrosystem zur Bildung einer Emulsion bereitzustellen, mit dem die Nachteile der herkömmlichen Techniken überwunden werden und das zur Durchführung des o. g. Verfahrens geeignet ist. Gemäß weiteren Gesichtspunkten besteht die Aufgabe der Erfindung in der Bereitstellung verbesserter Verfahren und Vorrichtungen zur Bearbeitung von Emulsionen, insbesondere zur Fusion dispergierter Tropfen durch elektrische Felder, mit denen die Nachteile der herkömmlichen Verfahren überwunden werden können.

Diese Aufgaben werden mit Verfahren und Vorrichtungen mit den Merkmalen der unabhängigen Patentansprüche gelöst. Vorteilhafte Ausführungsformen und Anwendungen der Erfindung ergeben sich aus den abhängigen Ansprüchen.

Verfahrensbezogen basiert die Erfindung auf der allgemeinen technischen Lehre, eine Emulsion (Emulsionsflüssigkeit) aus verschiedenen Flüssigkeiten zu bilden, die aufgereiht nebeneinander durch einen Kanal zu einem Dispersionsbereich fließen, in dem sich die Weite des Kanals lokal vergrößert. Die Weite des Kanals vergrößert sich in einer Richtung, die von der Aufreihungsrichtung der Flüssigkeiten vor dem Dispersionsbereich abweicht (Querschnittserweiterung). Stromaufwärts vor dem Dispersionsbereich wird in dem Kanal eine zweidimensionale, schichtförmige Strömung der verschiedenen Flüssigkeiten gebildet. Der Kanal weist eine langgestreckte Querschnittsform auf, deren geringere Dimension (im Folgenden: Höhe des Kanals, Kanalhöhe) erheblich kleiner als die größere Dimension (im Folgenden: Breite des Kanals, Kanalbreite) ist. Die Kanalhöhe zwischen Boden- und Deckflächen des Kanals ist so gering, dass die verschiedenen Flüssigkeiten beim Durchströmen des Kanals die Boden- und Deckflächen gleichseitig benetzen. Die Kanalbreite zwischen Seitenflächen des Kanals ist so gewählt, dass die verschiedenen Flüssigkeiten in vorbestimmten Volumenverhältnissen gleichzeitig nebeneinander den Kanal passieren können.

Die Flüssigkeiten, die sich im Kanal dem Dispersionsbereich nähern und im Dispersionsbereich in die kontinuierlichen und dispergierten Phasen überführt werden sollen, bilden im Kanal parallele Strömungen. Jede der Strömungen umfasst eine einzelne, kontinuierliche Flüssigkeitsphase (Einphasen-Strömung). Die Strömungen befinden sich in einem dynamisch stabilen Zustand, d. h. die Grenzflächen zwischen den Strömungen sind mit Abstand von dem Dispersionsbereich im Kanal stabil ausgerichtet (dynamisch stabile Grenzfläche).

Bei der Querschnittserweiterung im Dispersionsbereich des Kanals vergrößert sich die Kanalweite derart, dass der dynamisch stabile Zustand der Strömungen gestört wird. Allgemein kann dies mit jeder Querschnittserweiterung erreicht werden, die von der Richtung abweicht, in der die Strömungen vor dem Dispersionsbereich nebeneinander angeordnet sind. In der Praxis bevorzugt ist eine Querschnittserweiterung, die sich senkrecht zur Ausrichtung der Strömungen, insbesondere senkrecht zur Kanalbreite oder parallel zur Kanalhöhe erstreckt. Im Dispersionsbereich vergrößert sich die Kanalhöhe auf einen Wert, in dem die Strömungen nicht stabil die Boden- und Deckflächen des Kanals benetzen. Im Dispersionsbereich erfolgt ein Übergang in einen dynamisch instabilen Zustand.

Die Erfinder haben festgestellt, dass beim Übergang vom dynamisch stabilen Zustand in den dynamisch instabilen Zustand überraschenderweise Tropfen mit konstanten Tropfendurchmessern gebildet werden, welche die dispergierte Phase der Emulsion bilden. Die im Dispersionsbereich gebildete Emulsion ist monodispers. Während die Flüssigkeit, die in die dispergierte Phase überführt wird, im Kanal stromaufwärts vom Dispersionsbereich durch die Wechselwirkung mit den Boden- und Deckflächen des Kanals einen bestimmten Laplace-Druck erfährt, kommt es im Dispersionsbereich zur Verminderung des Laplace-Druckes und daher zu einer Vergrößerung der Schichtdicke der Strömung und zu einem lokalen Saugeffekt in Richtung der Flüssigkeitsströmung. Da im Ergebnis dieses Saugeffekts an der Querschnittserweiterung des Kanals (Dispersionsbereich) die Flüssigkeit aus dem Kanal schneller gezogen wird, als sie nachströmen kann, wird eine Abschnürung und damit die Tropfenform der dispergierten Phase gebildet. Es wurde festgestellt, dass diese Folge der Verminderung des Laplace-Druckes und der Tropfenabschnürung mit hoher Regelmäßigkeit periodisch realisiert wird, so dass die dispergierte Phase mit einer hohen Monodispersität gebildet wird. Die Tropfengröße hängt besonders von der Stärke der Querschnittserweiterung im Dispersionsbereich ab und kann entsprechend durch die Änderung des Kanalquerschnitts (insbesondere der Kanalhöhe) stromaufwärts des Dispersionsbereiches eingestellt werden. Weitere Möglichkeiten zur Beeinflussung der Tropfengröße bestehen in der Einstellung der Viskosität und/oder der Strömungsgeschwindigkeiten der zum Dispersionsbereich zugeführten Flüssigkeiten.

Ein weiterer wichtiger Vorteil des erfindungsgemäßen Verfahrens besteht darin, dass die Bildung der Emulsion ausschließlich durch den genannten Übergang vom dynamisch stabilen zum dynamisch instabilen Zustand verursacht wird, wobei dieser Übergang unabhängig von der Ausrichtung der Querschnittserweiterung des Kanals im Dispersionsbereich relativ zur äußeren Umgebung ist. Wenn das Mikrosystem typischerweise mit einer horizontal ausgerichteten Bodenfläche angeordnet und betrieben wird, kann die Querschnittserweiterung im Dispersionsbereich insbesondere durch eine Absenkung der Bodenfläche, eine Anhebung der Deckfläche oder eine Kombination aus der Absenkung und der Anhebung erhalten werden. Alternativ ist eine Anordnung und ein Betrieb des Mikrosystems mit nicht horizontal ausgerichteten Boden- und Deckflächen möglich. Beispielsweise können sich die größere Dimension des Kanals vor dem Dispersionsbereich vertikal und die geringere Dimension des Kanals horizontal erstrecken. In diesem Fall ist die Querschnittserweiterung im Dispersionsbereich ebenfalls horizontal ausgerichtet.

Vorteilhafterweise besteht auch keine besondere Anforderung an die Form der Querschnittserweiterung. Der Kanal kann sich im Dispersionsbereich bspw. lokal durch eine Rampenform der Boden- und/oder Deckflächen erweitern. Gemäß einer bevorzugten Ausführungsform der Erfindung ist jedoch eine stufenförmige Querschnittserweiterung vorgesehen. Der Dispersionsbereich wird durch eine Stufe gebildet, an der sich die Kanalhöhe von einem ersten Wert, in dem der dynamisch stabile Zustand gegeben ist, zu einem zweiten Wert vergrößert wird, in dem der dynamisch instabile Zustand gegeben ist. Ein besonderer Vorteil der Emulsionsbildung am stufenförmigen Dispersionsbereich besteht in der verbesserten Monodispersität der Emulsion, die bei geeigneter Wahl der Volumenanteile der kontinuierlichen und dispergierten Phasen als sog. kristalline Emulsion gebildet werden kann.

Das erfindungsgemäße Verfahren zur Bildung von Emulsionen kann allgemein mit allen Kombinationen von mindestens zwei Flüssigkeiten realisiert werden, die verschiedene Oberflächenspannungen aufweisen. Es können insbesondere direkte (z. B. Öl-in-Wasser-Emulsionen, O/W-Emulsionen), indirekte (z. B. Wasser-in-Öl-Emulsionen, W/O-Emulsionen) und komplexere Emulsionen (z. B. O/W/O oder W/O/W) gebildet werden.

Wenn gemäß einer weiteren bevorzugten Ausführungsform der Erfindung mindestens eine der Flüssigkeiten, die in der Emulsion die mindestens eine dispergierte Phase bilden soll, über mindestens einen Injektionskanal in den Kanal stromaufwärts vom Dispersionsbereich eingespeist wird, ergeben sich weitere Vorteile für die Steuerbarkeit der Emulsionsbildung. Der mindestens eine Injektionskanal mündet als Seitenkanal in eine der Boden- oder Deckflächen des Kanals. Die durch den Injektionskanal in den Kanal eintretende Flüssigkeit zur Bildung der dispergierten Phase berührt im dynamisch stabilen Zustand die Boden- und Deckflächen, wobei relativ zu den Boden- und Deckflächen vorzugsweise ein Kontaktwinkel gebildet wird, der größer oder gleich 90° ist. Im dynamisch stabilen Zustand ordnen sich die aus dem Injektionskanal in den Kanal eintretende Flüssigkeit und die zur Bildung der kontinuierlichen Phase im Kanal strömende Flüssigkeit automatisch in Form der nebeneinander angeordneten Strömungen. Die Flüssigkeit für die zu dispergierende Phase ist vorzugsweise beidseitig von Teilströmungen zur Bildung der kontinuierlichen Phase eingeschlossen. Die Teilströmung auf einer oder beiden Seiten kann einen dünnen Film der Flüssigkeit zur Bildung der kontinuierlichen Phase zwischen der Kanalwand und der zu dispergierenden Phase umfassen.

Die erfindungsgemäße Zuführung von mehreren, nebeneinander angeordneten Strömungen zu dem Dispersionsbereich im dynamisch stabilen Zustand ermöglicht vorteilhafterweise eine Erweiterung dahingehend, dass eine komplexe Emulsion zum Beispiel mit mehreren dispergierten Phasen oder mit zusammengesetzten dispergierten Phasen gebildet werden. Zu diesem Zweck werden mehrere Einphasen-Strömungen oder Mehrphasen-Strömungen mit Flüssigkeiten zur Bildung der dispergierten Phasen jeweils getrennt durch eine Teilströmung der Flüssigkeit zur Bildung der kontinuierlichen Phase nebeneinander angeordnet. Die verschiedenen Flüssigkeiten für die dispergierten Phasen werden über mehrere, z. B. nebeneinander angeordnete Injektionskanäle in den Kanal zugeführt, wo sie bis zu dem Dispersionsbereich nebeneinander, insbesondere parallel verlaufen, wo die komplexen Anordnungen der dispergierten Phasen, die ggf. verschiedene Substanzen enthalten, gebildet werden.

Wenn erfindungsgemäß mehrere verschiedene Flüssigkeiten für dispergierte Phasen zu dem Dispersionsbereich strömen, kann die dort gebildete Emulsion vorteilhafterweise mehrere dispergierte Phasen enthalten, von denen jede eine Reihe dispergierter Tropfen umfasst.

Wichtige Vorteile des erfindungsgemäßen Verfahrens gegenüber den herkömmlichen Jet- oder Scher-Techniken bestehen in der hohen Konstanz der Tropfengröße (Monodispersität) der dispergierten Phase und in der Einstellbarkeit des Volumenverhältnis der dispergierten Phase relativ zur kontinuierlichen Phase. Vorzugsweise weisen die Tropfen der dispergierten Phase Tropfendurchmesser auf, die kleiner oder gleich 1 mm sind. Besonders bevorzugt betragen die Durchmesser weniger als 200 µm. Damit kann vorteilhafterweise insbesondere bei chemischen oder biochemischen Untersuchungen der Substanzverbrauch vermindert und die Untersuchungsdichte erhöht werden. Die Tropfendurchmesser hängen insbesondere von den Kanaldimensionen und dem Verhältnis der Flussraten der Strömungen vor dem Dispersionsbereich ab.

Ein wichtiger Vorteil der erfindungsgemäß mit hoher Reproduzierbarkeit erreichten Tropfendurchmesser im Sub-mm-Bereich ist dadurch gegeben, dass der mit der Bildung der Emulsion erreichte, metastabile Zustand der Zusammensetzung aus kontinuierlicher und dispergierter Phase eine für praktische Anwendungen des Mikrosystems ausreichend hohe Lebensdauer besitzt. Die Tropfen der dispergierten Phase können bis zur gewünschten Anwendung, z. B. für analytische Zwecke als abgegrenzte Kompartimente erhalten bleiben. Um den metastabilen Zustand bei Bedarf zu stabilisieren, können die Flüssigkeiten, z. B. der kontinuierlichen Phase Tenside (z. B. Sorbitan mono-oleat, CAS 1338-43-8) zugesetzt werden. Der Tensidzusatz ist jedoch nicht zwingend erforderlich. Beispielsweise haben sich Emulsionen aus Ferrofluiden und Wasser als außerordentlich stabil erwiesen.

Gemäß einer weiteren, bevorzugten Ausführungsform der Erfindung kann eine gezielte Einstellung der Flussraten der zu dem Dispersionsbereich fließenden Einphasen-Strömungen vorgesehen sein. Die Erfinder haben festgestellt, dass in Abhängigkeit von den Flussratenverhältnissen der Strömungen die geometrische Anordnung der Tropfen der dispergierten Phase in der Emulsion reproduzierbar beeinflusst werden kann. Zur Bildung der Emulsion wird das Verhältnis des pro Zeiteinheit anströmenden Volumens der Flüssigkeit für die dispergierte Phase zu dem Volumen der Flüssigkeit für die kontinuierliche Phase im

Bereich von 0.1 bis 0.9, und für eine Emulsion mit regelmäßig angeordneten Tropfen (kristalline Emulsion) im Bereich von 0.5 bis 0.9 gewählt. Im letzteren Fall können die Tropfen der dispergierten Phase beispielsweise zwei Reihen mit jeweils versetzt angeordneten Tropfen bilden.

Wenn gemäß einer weiteren Variante der Erfindung während der Bildung der Emulsion die chemische Zusammensetzung wenigstens einer der Flüssigkeiten für die mindestens eine dispergierte Phase variiert wird, kann die Emulsion als kompartimentierte Flüssigkeit mit einer Tropfenfolge gebildet werden, deren chemische Zusammensetzung in vorbestimmter Weise variiert. Dies ermöglicht in vorteilhafter Weise die Durchführung von Screening-Reaktionen mit einer hohen Durchsatzrate. Beispielsweise kann die Emulsion eine Folge von Tropfen mit variierendem pH-Wert umfassen.

Die Erfindung weist nicht nur Vorteile für den Vorgang der Emulgierung an sich auf. Wegen der hohen Monodispersität und der Steuerbarkeit der Geometrie der mindestens einen dispergierten Phase werden auch vorteilhafte Wirkungen für weitere Manipulationsschritte, insbesondere für eine weitere Behandlung der Emulsion erreicht. So kann gemäß einer vorteilhaften Ausführungsform der Erfindung eine Aufteilung der Emulsion in mindestens zwei Teilemulsionen vorgesehen sein. Gemäß einer ersten Variante können die Teilemulsionen durch Tropfenfolgen gebildet werden, wobei die Volumen der Tropfen gleich den Volumen der Tropfen der Emulsion vor der Aufteilung sind. Hierzu wird die Emulsion mit mindestens zwei Reihen relativ zueinander versetzt angeordneter Tropfen gebildet, die zur Aufteilung an einer Verzweigung (insbesondere Y-förmige Kanalteilung) in die Teilemulsionen aufgetrennt werden. Die Trennung kann alternativ z. B. von 4 Reihen auf 2 Doppelreihen oder von 4 Reihen auf eine Dreifach- und eine Einfachreihe oder von 3 Reihen auf eine Doppel- und eine Einfachreihe erfolgen. Gemäß einer zweiten Variante können die Teilemulsionen Tropfen umfassen, deren Volumen kleiner als die Volumen der Tropfen der Emulsion vor der Aufteilung sind. Die Erfinder haben festgestellt, dass durch die hohe Monodispersität und Regelmäßigkeit der Emulsionsbildung beim Auftreffen einer einzelnen Tropfenfolge auf eine Y-förmige Kanalverzweigung vorteilhafterweise jeder Tropfen mit einer unerwartet hohen Regelmäßigkeit in zwei Teiltropfen geteilt, insbesondere halbiert werden kann. Die Aufteilung der Emulsion kann mehrstufig an mehreren Verzweigungen vorgesehen sein.

Gemäß einer weiteren, für die Behandlung und Anwendung der erfindungsgemäß gebildeten Emulsion vorteilhaften Ausführungsform kann eine Zusammenführung von Teilemulsionen zu einer gemeinsamen Emulsionsströmung vorgesehen sein.

Die Kombination der genannten Varianten der Aufteilung und Zusammenführung von Emulsionen und Teilemulsionen können in Abhängigkeit von der konkreten Aufgabe des fluidischen Mikrosystems kombiniert werden, um bspw. bestimmte Tropfenfolgen oder Tropfengrößenfolgen zu erzeugen. Gemäß einer besonders vorteilhaften Variante der Erfindung kann bspw. die ursprüngliche gebildete Emulsion umgeordnet werden. Zuerst bildet die dispergierte Phase der Emulsion eine gerade Folge von Tropfen (sog. "Bambus"-Struktur). Nach der Umordnung kann die Emulsion mehrere parallele Folgen von relativ zueinander versetzt angeordneten Tropfen mit kleineren oder gleichen Volumen bilden (sog. "Zick-Zack"-Struktur).

Für die Anwendung der Erfindung kann es von Bedeutung sein, an bestimmten Positionen im Mikrosystem Wechselwirkungen zwischen benachbarten Tropfen zu erzielen. Gemäß einer weiteren Ausführungsform der Erfindung kann daher eine Verschmelzung von zwei benachbarten Tropfen der mindestens einen dispergierten Phase vorgesehen sein. Die Verschmelzung der benachbarten Tropfen umfasst eine zumindest lokale Unterbrechung der zwischen den Tropfen durch die kontinuierliche Phase gebildeten Grenzfläche. In der Praxis hat sich als besonders vorteilhaft erwiesen, wenn die Grenzfläche durch die Wirkung eines elektrischen Feldes, einer Lichtbestrahlung oder einer lokalen Temperaturerhöhung unterbrochen wird. Die Erfinder haben festgestellt, dass bereits eine kurzzeitige Destabilisierung der kontinuierlichen Phase durch das elektrische Feld oder die Lichtbestrahlung eine Fusion der Tropfen bewirkt.

Die erfindungsgemäße Fusion der Tropfen kann vorteilhafterweise unabhängig von der Art der Tropfenerzeugung bereitgestellt werden. Vorzugsweise werden die Tropfen mit dem erfindungsgemäßen Verfahren der Emulsionsbildung an einer Querschnittserweiterung des Kanals im Mikrosystem erzeugt. Alternativ können mit anderen, herkömmlichen Emulgierungsverfahren hergestellte Tropfen der erfindungsgemäßen Fusionierung unter der Wirkung elektrischer Felder unterzogen werden.

Durch die Einstellung der Volumenverhältnisse der Flüssigkeiten für die kontinuierliche und die dispergierte Phase kann die geometrische Anordnung der Tropfen in der Emulsion beeinflusst werden. Die Bildung von zwei geraden Tropfenfolgen mit relativ zueinander versetzt angeordneten Tropfen ist das Ergebnis einer von den Erfinder erstmalig beobachteten gegenseitigen Beeinflussung der Tropfenbildung im Dispersionsbereich. Die Tropfenbildung wird mittels Selbstorganisation automatisch synchronisiert. Diese Erscheinung kann auch bei der Bildung von mehreren dispergierten Phasen erreicht werden. Alternativ oder zusätzlich zu der inhärenten (selbstorganisierten) Tropfenbildung kann erfindungsgemäß eine Zeitsteuerung der Tropfenbildung vorgesehen sein. Diese Variante ist insbesondere von Vorteil, wenn bestimmte Untersuchungen, Behandlungen oder Messungen an der Emulsion mit der Tropfenbildung synchronisiert werden sollen. Die Zeitsteuerung kann bspw. eine Synchronisation der Bildung von Tropfen von verschiedenen dispergierten Phasen umfassen. Besonders bevorzugt wird die Synchronisation durch eine zeitlich gesteuerte, lokale Erwärmung der Flüssigkeiten vor dem Eintritt in den Dispersionsbereich realisiert.

Vorrichtungsbezogen wird die o. g. Aufgabe der Erfindung durch die allgemeine technische Lehre gelöst, ein fluidisches Mikrosystem zur Bildung einer Emulsion mit einem Dispersionsbereich und einem Kanal, der zu dem Dispersionsbereich führt, dahingehend weiterzuentwickeln, dass der Kanal stromaufwärts vor dem Dispersionsbereich eine Führung für eine zweidimensionale Strömung von Flüssigkeiten zur Bildung der kontinuierlichen und dispergierten Phasen der Emulsion bildet und im Dispersionsbereich eine Querschnittserweiterung in einer Richtung aufweist, die von der zweidimensionalen Ausrichtung der Strömung im Kanal vor dem Dispersionsbereich abweicht, insbesondere relativ zu der zweidimensionalen Ausrichtung senkrecht steht.

Mit dem Begriff "fluidisches Mikrosystem" wird hier jedes fluidische Bauteil mit mindestens zwei Eingängen zur Zuführung der Flüssigkeiten für die kontinuierlichen und dispergierten Phasen und mindestens einem Ausgang zur Bereitstellung der Emulsion bezeichnet, wobei der Dispersionsbereich, vorzugsweise in Form einer Stufe in einem Kanal zwischen den Ein- und Ausgängen angeordnet ist. Das fluidische Mikrosystem enthält Kanäle oder andere Hohlräume, die in mindestens einer Richtung eine typische Querschnittsdimension im Mikrometerbereich (sub-mm-Bereich) aufweist. Das erfindungsgemäße Mikrosystem ist vorzugsweise als Fluidikchip gebildet. Der Dispersionsbereich ist mit einem Abstand von den Eingängen zur Flüssigkeitszuführung angeordnet. Der Abstand beträgt mindestens einen Durchmesser der Tropfen der dispergierten Phase, vorzugsweise mindestens 2 mm.

Zur Bereitstellung der Führung für eine zweidimensionale Strömung weist der Kanal stromaufwärts von dem Dispersionsbereich ein Aspektverhältnis (W₁/H₁) auf, das den Quotienten aus Breite (W₁) und Höhe (H₁) des Kanals repräsentiert und das im Bereich von 100:1 bis 2:1 gewählt ist. In diesem Bereich können vorteilhafterweise die meisten interessierenden Flüssigkeiten mit Anwendungen in der Biochemie oder der analytischen Chemie zweidimensionale Strömungen bilden.

Vorteilhafte Varianten des erfindungsgemäßen Mikrosystems zeichnen sich durch wenigstens eine der Komponenten aus, die eine Dosiereinrichtung zur Einstellung einer Flussrate der Flüssigkeiten für die kontinuierlichen und dispergierten Phasen, eine Stelleinrichtung zur Variation der chemischen Zusammensetzung der Flüssigkeit für die mindestens eine dispergierte Phase, eine ein- oder mehrstufige Verzweigung zur Aufteilung der Emulsion, eine ein- oder mehrstufige Verbindung zur Zusammenführung von Teilemulsionen, eine Fusionseinrichtung zur Verschmelzung benachbarter Kompartimente dispergierter Phasen und eine Synchronisationseinrichtung zur Zeitsteuerung der Tropfenbildung an dem Dispersionsbereich umfassen.

Weitere Einzelheiten und Vorteile der Erfindung werden aus der folgenden Beschreibung der beigefügten Zeichnungen ersichtlich. Es zeigen:
- Figur 1:: schematische Drauf- und Seitenansichten einer ersten Ausführungsform einer erfindungsgemäßen Vorrichtung zur Bildung einer Emulsion;
- Figur 2:: eine Folge von photographischen Darstellungen der Tropfenerzeugung gemäß der Erfindung;
- Figur 3:: photographische Darstellungen verschiedener Vari- anten der Anordnung der dispergierten Phase;
- Figur 4:: eine schematische Perspektivansicht einer weite- ren Ausführungsform einer erfindungsgemäßen Vor- richtung zur Bildung einer Emulsion;
- Figur 5:: eine schematische Draufsicht auf eine weitere Ausführungsform einer erfindungsgemäßen Vorrich- tung zur Bildung einer Emulsion;
- Figuren 6: bis 8 verschiedene Ausführungsformen erfindungsge- mäß vorgesehener Synchronisationseinrichtungen zur Zeitsteuerung der Tropfenerzeugung;
- Figuren 9 bis 11:: Ausführungsbeispiele von Kanalgeometrien zur Aufteilung oder Zusammenführung von Emulsio- nen;
- Figuren 12 und 13:: verschiedene Ausführungsformen einer er- findungsgemäß verwendeten Positioniereinrichtung zur Anordnung der Tropfen der dispergierten Pha- se;
- Figur 14:: weitere Ausführungsformen von Elektrodenanordnun- gen einer Fusionseinrichtung, und
- Figur 15:: eine graphische Darstellung der Auswahl von Span- nungsamplituden zur Fusion dispergierter Tropfen bei unterschiedlicher Lamellendicke.

Bevorzugte Ausführungsbeispiele der Erfindung werden im Folgenden unter Bezug auf die Merkmale eines Kanals mit einem Dispersionsbereich zur Bildung einer Emulsion beschrieben. Der Kanal kann Teil eines Fluidikchips oder eines von einem Fluidikchip getrennten Bauteils zur Emulsionsbildung sein. Einzelheiten derartiger Fluidikchips oder anderer mikrofluidischer Bauteile, wie z. B. deren Ankopplung an Flüssigkeitsreservoire, die Erzeugung und Steuerung von Flüssigkeitsströmungen durch Pumpeinrichtungen, die Abführung von Proben, die strömungstechnische Beeinflussung der Flüssigkeiten und die Durchführung von Messungen sind aus der herkömmlichen fluidischen Mikrosystemtechnik an sich bekannt und werden daher hier im Einzelnen nicht beschrieben. Des Weiteren ist zu betonen, dass die Umsetzung der Erfindung nicht auf die beispielhaft angegebenen Größen, Formen und Materialien des Kanals mit dem Dispersionsbereich beschränkt ist. Beispielsweise können anstelle eines Kanals mit einem langgestreckten, rechteckigen Querschnitt ein Kanal mit einem langgestreckten, abgerundeten Querschnitt oder im Dispersionsbereich anstelle einer Stufe eine Rampe zur Querschnittserweiterung vorgesehen sein.

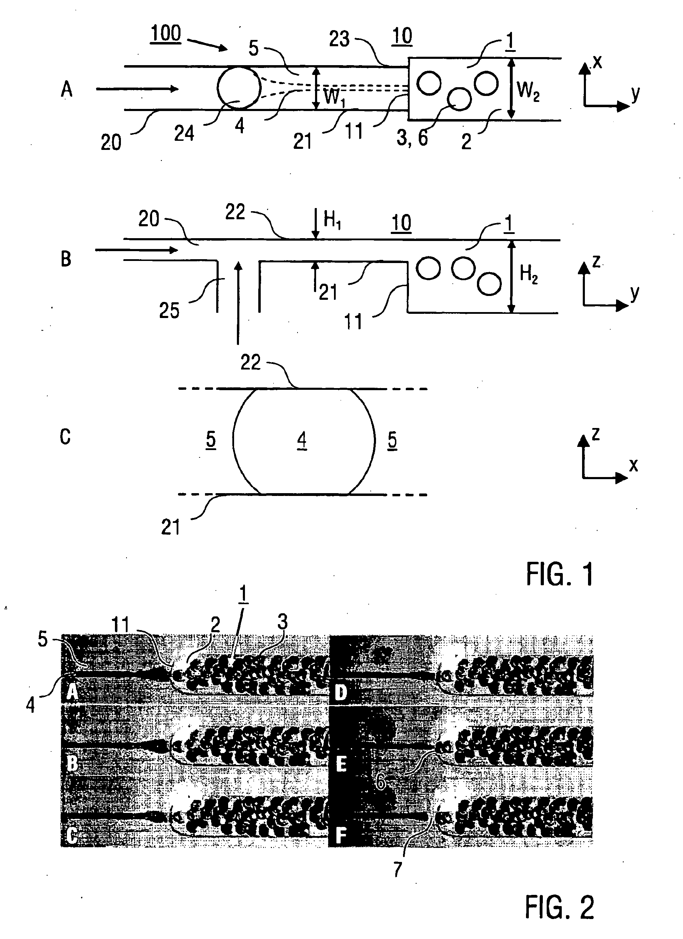

Figur 1 illustriert in schematischen, vergrößerten Ansichten eine Draufsicht (Figur 1A) eine Seitenansicht (Figur 1B) und eine vergrößerte Schnittansicht (Figur 1C) einer ersten Ausführungsform der erfindungsgemäßen Vorrichtung 100 zur Bildung einer Emulsion. Die Vorrichtung 100 enthält einen Dispersionsbereich 10, der in einem Kanal 20 angeordnet ist. Der Dispersionsbereich 10 umfasst eine Stufe 11, an der sich die Kanalhöhe von einem ersten Wert H₁ auf einen zweiten Wert H₂ vergrößert. Die Stufe 11 bildet die erfindungsgemäß zur Bildung der Emulsion verwendete Kanalerweiterung, an der ein Übergang vom dynamisch stabilen zum dynamisch instabilen Zustand der in Kanal 20 strömenden Flüssigkeiten erfolgt. Des Weiteren ist im Dispersionsbereich 10 optional eine Verbreiterung von einer ersten Kanalbreite W₁ auf eine zweite Kanalbreite W₂ vorgesehen.

Die Kanalbreite W₁ ist z. B. im Bereich von 200 µm bis 1000 µm gewählt. Zur Bildung komplexer Emulsionen (siehe z. B. Figur 2) kann eine größere Kanalbreite vorgesehen sein. Die Erfindung kann auch mit geringeren Kanalbreiten umgesetzt werden. Die Höhe H₁ ist so gewählt, dass ein vorbestimmtes Aspektverhältnis W₁/H₁ erreicht wird, mit dem die im Kanal 20 strömenden Flüssigkeiten eine dynamisch stabile Grenzfläche bilden. Typischerweise sollte das Aspektverhältnis mindestens 10 betragen. Entsprechend ist die Kanalhöhe H₁ z. B. im Bereich von 5 µm bis 100 µm gewählt.

Die Kanalbreite W₂ stromabwärts nach dem Dispersionsbereich 10 ist z. B. im Bereich von 100 µm bis 1000 µm gewählt. Die Kanalhöhe H₂ beträgt z. B. 50 µm bis 1000 µm, wobei stromabwärts nach dem Dispersionsbereich das Aspektverhältnis W₂/H₂ erheblich verringert ist und z. B. 0.5 bis 1 beträgt.

Der Kanal 20 umfasst eine ebene Bodenfläche 21, eine ebene Deckfläche 22 und Seitenflächen 23. In Abhängigkeit von dem zur Herstellung des Kanals 20 verwendeten Werkzeug können die Seitenflächen 23 ebenfalls eben und senkrecht zu den Boden- und Deckflächen 21, 22 oder alternativ relativ zu mindestens einer der angrenzenden Boden- und Deckflächen 21, 22 gekrümmt sein.

In der Bodenfläche 21 ist mit einem Abstand von dem Dispersionsbereich 10 eine Einlassöffnung 24 vorgesehen, an der sich ein Injektionskanal 25 zur Injektion einer Flüssigkeit in den Kanal 20 öffnet. Der Durchmesser des Injektionskanals 25 erstreckt sich beim dargestellten Beispiel (Figur 1A) über die gesamte Breite W₁ des Kanals 20. Alternativ kann der Durchmesser des Injektionskanals 25 kleiner oder größer als die Kanalbreite W₁ sein.

Der Kanal 20 mit dem Dispersionsbereich 10 und dem Injektionskanal 25 sind z. B. in einem Chipkörper eines fluidischen Mikrosystems vorgesehen. Der Chipkörper ist einstückig oder mehrteilig hergestellt und weist vorzugsweise wenigstens ein Teil (z. B. eine Deckplatte) aus einem transparenten Material, z. B. Kunststoff auf. Als Material für den Chipkörper wird z. B. PMMA verwendet, das vorteilhafterweise optisch transparent und für die meisten interessierenden Flüssigkeiten inert ist. Alternativ können der Chipkörper oder Teile von diesem aus anderen Materialien, wie z. B. Glas oder Silizium hergestellt sein.

Gemäß einer vorteilhaften Ausführungsform der Erfindung weist der Chipkörper auf mindestens einer in das Innere des Kanals oder der Zweige (siehe unten) weisenden Oberfläche eine elektrisch leitfähige Schicht auf. Vorteilhafterweise kann die leitfähige Schicht auf ein vorbestimmtes Potential oder ein freies Potential ("floating") gelegt werden, um unerwünschte Aufladungen der Emulsion zu vermeiden. Das Potential wird so gewählt, dass es ein elektrostatisches Potential der Tropfen in der Emulsion ausgleicht. Die leitfähige Schicht kann beispielsweise auf den Boden- und/oder Deckflächen vorgesehen sein und zum Beispiel auf Erdpotential oder auf einem freien Potential liegen. Diese Ausführungsform der Erfindung ist besonders für Emulsionen von Vorteil, die eine schaumartige Struktur aufweisen (geringer Volumenanteil der kontinuierlichen Phase), da sich diese als extrem empfindlich gegen elektrostatische Aufladungen erwiesen haben.

Zur Bildung der Emulsion 1 mit einer kontinuierlichen Phase 2 und einer dispergierten Phase 3 werden im Kanal 20 Strömungen 4, 5 der verschiedenen Flüssigkeiten für die kontinuierliche und die dispergierte Phase bereitgestellt. Die Strömungen 4, 5 enthalten die entsprechenden Flüssigkeiten jeweils als einzelne, flüssige Phase. Im dargestellten Beispiel werden zwei Strömungen 4, 5 erzeugt. Die Strömung 4 mit der Flüssigkeit für die dispergierte Phase 3 ist beidseitig von der Strömung 5 mit der Flüssigkeit für die kontinuierliche Phase 2 eingeschlossen. Figur 1C zeigt in vergrößerter Schnittansicht schematisch die dynamisch stabile Grenzfläche zwischen den Strömungen 4 und 5. Die Strömung 4 der Flüssigkeit für die dispergierte Phase erstreckt sich zwischen den Boden- und Deckflächen 21, 22 des Kanals 20. Die Boden und Deckflächen 21, 22 werden von der Strömung 4 unmittelbar berührt, oder sie sind von der Strömung 4 durch einen (mesoskopischen oder molekular dünnen) Film aus der Flüssigkeit für die kontinuierliche Phase getrennt.

Die kontinuierliche Phase umfasst z. B. eine organisches Lösungsmittel auf der Basis von Kohlenwasserstoffen, (z. B. Isopar M, Produktbezeichnung), während die dispergierte Phase wässrige Lösungen oder Dispersionen umfasst. Die Strömungsgeschwindigkeit im Kanal beträgt z. B. rd. 10 bis 100 mm/s.

Durch die Destabilisierung der Strömungen 4, 5 an der Stufe 11 wird die in der kontinuierlichen Phase 2 verteilte dispergierte Phase 3 der Emulsion 1 gebildet. Im Unterschied zu den herkömmlichen Techniken basiert die Bildung der Tropfen 6 der dispergierten Phase 3 nicht auf der Wirkung von Scherkräften oder einer Rayleigh-Instabilität, sondern auf der Zerstörung der dynamischen Stabilität vor der Stufe 11 und der Bildung eines neuen Gleichgewichtszustandes unter der Wirkung des an der Stufe 11 sich vermindernden Laplace-Druckes und der Oberflächenspannung. Vorteilhafterweise repräsentiert die an der Stufe 11 gegebene Querschnittserweiterung des Kanals 20 eine erheblich vereinfachte Kanalgeometrie. Darüber hinaus kann in der Emulsion eine hervorragende Monodispersität erreicht werden, die besser als 1.5 % ist. Die Tropfenvolumen können im Wesentlichen durch die Kanalhöhe H₁ und die Kanalbreite W₁ eingestellt werden, während die Strömungsgeschwindigkeit kaum einen Einfluss auf die Tropfengröße hat.

Ein weiterer Vorteil der Emulsionsbildung an der Stufe 11 besteht darin, dass keine Zusatztropfen (sog. Satellitentropfen) gebildet werden. Der Abschnürvorgang an der Stufe 11 weist eine hohe Geschwindigkeit auf (Abschnürung innerhalb einiger Millisekunden), so dass eine sichere Abschnürung jedes Tropfens ermöglicht wird.

Die Figuren 2A bis 2F sind photographische Darstellungen des Abschnürvorganges eines Tropfens 6 der dispergierten Phase 3, die jeweils mit einem Zeitabstand von 2 ms aufgenommen wurden. Figur 2A zeigt stromaufwärts vor der Stufe 11 die Strömungen 4 und 5 für die dispergierte und kontinuierliche Phase. An der Stufe 11 ist eine Kanalerweiterung gemäß Figur 1 vorgesehen. Stromabwärts nach der Stufe 11 ist der Kanal mit der Emulsion 1 umfassend die kontinuierliche Phase 2 und die dispergierte Phase 3 gefüllt. Figur 2A zeigt die Situation, wenn die Abschnürung eines Tropfens an der Stufe 11 gerade abgeschlossen ist. Kurz danach tritt weitere Flüssigkeit der Strömung 4 über die Stufe 11 (Figuren 2B, 2C). Nach Passage der Stufe 11 und der Verminderung des Laplace-Druckes, der auf die Strömungen 4, 5 wirkt, wächst der nächste Tropfen (Figuren 2D, E), der durch den verminderten Laplace-Druck aus der Strömung 4 stromaufwärts vor der Stufe 11 Flüssigkeit herauszieht. Im Ergebnis ist während des Abschnürvorganges (Figur 2F) eine Lücke 7 zwischen dem gerade abgeschnürten Tropfen und der Strömung 4 erkennbar. Die Lücke 7 wird anschließend nach einer Aufweitung des Endes der Strömung 4 (siehe Figuren 2A, B) von der nachströmenden Flüssigkeit durchbrochen, so dass der nächste Tropfen gebildet werden kann.

Das Volumen der Tropfen 6 der dispergierten Phase 3 hängt von dem Verhältnis der Flussraten der Strömungen 4, 5 ab. Für den Quotienten der Flussraten der Strömung 4 (für die dispergierte Phase) und der Strömung 5 (für die kontinuierliche Phase) im Bereich von 0.1 bis 0.8 ergibt sich eine im Wesentlichen lineare Abhängigkeit des Tropfenvolumens im Bereich von 0.1 nl bis 0.4 nl (Gesamt-Flussrate: 147 µl/h, Kanalhöhe H₁: 10 µm). Auch die Frequenz der Tropfenerzeugung kann in Abhängigkeit von der Flussrate eingestellt werden. Für Flussraten der Strömung 4 (für die dispergierte Phase) bis zu 0.15 µl/s wurden lineare Abhängigkeiten der Frequenz der Tropfenerzeugung gefunden, die für größere Tropfenvolumen (z. B. 2.6 nl) bis 50 Hz und für kleinere Tropfenvolumen (z. B. 0.3 nl) bis 120 Hz reichen. Die Obergrenze der Frequenz der Tropfenerzeugung hängt von der Grenzflächenspannung, den Viskositäten der dispergierten und kontinuierlichen Phase und den Tropfenvolumen ab. Die erfindungsgemäß erzielten hohen Tropfenfrequenzen bei gleichzeitig guter Steuerung der Tropfenvolumen und Monodispersität stellen einen wichtigen Vorteil der Erfindung für gewerbliche Anwendungen bei der "on-line"-Emulgierung im fluidischen Mikrosystem oder einem entsprechenden Bauteil dar.

Die Flussraten werden mit einer Dosiereinrichtung (nicht dargestellt) gesteuert, die z. B. eine Dosierpumpe oder eine Spritzenpumpe umfasst.

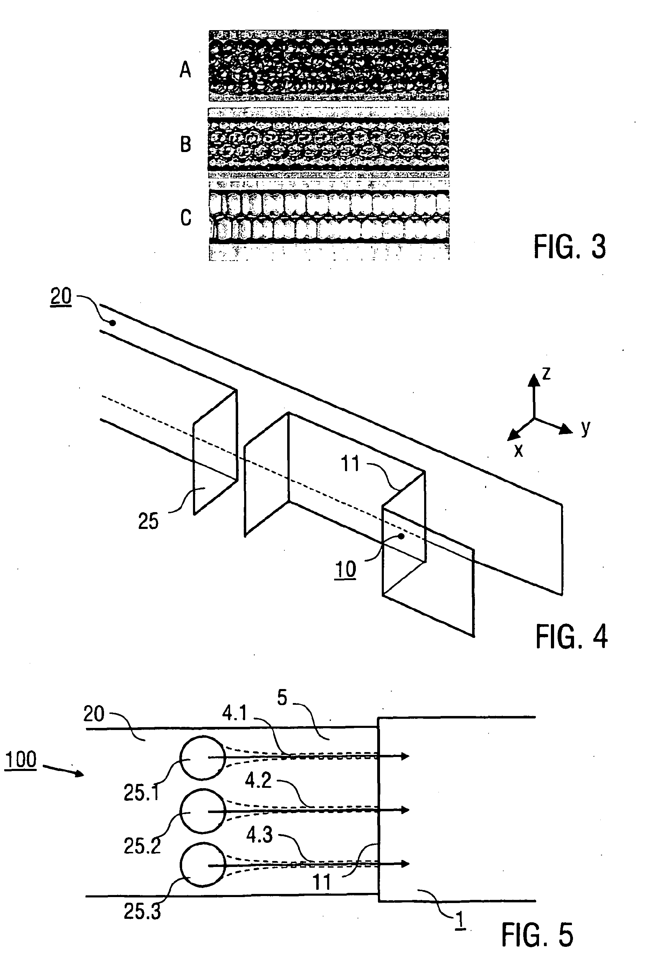

Die Figuren 3A bis 3C illustrieren, wie mit einer Einstellung der Verhältnisse der Flussraten die geometrische Anordnung der dispergierten Phase in der Emulsion beeinflusst werden kann. Bei einem Volumenanteil der Flüssigkeit für die dispergierte Phase von 55 % (Figur 3A) bilden die Tropfen der dispergierten Phase eine ungeordnete Packung. Für einen größeren Volumenanteil von z. B. 79 % (Figur 3B) oder 85 % (Figur 3C) ergibt sich eine geordnete, Schaum-ähnliche Anordnung, in der das Volumen der Emulsion im Wesentlichen durch die Volumen der Tropfen der dispergierten Phase gebildet wird, die durch dünne Schichten der kontinuierlichen Phase voneinander getrennt sind. Mit der erfindungsgemäßen Technik wird erstmalig die Bildung und Manipulation von Schaumähnlichen, regelmäßigen Strukturen in Flüssig-Flüssig-Systemen ermöglicht, die bisher nur in Flüssig-Gasförmig-Systemen mit größeren Dimensionen erreicht wurden. Eine Anordnung der Tropfen gemäß Figur 3C kann auch durch die gleichzeitige Erzeugung von zwei dispergierten Phasen erreicht werden (siehe unten).

Figur 4 zeigt ausschnittsweise eine abgewandelte Ausführungsform der erfindungsgemäßen Vorrichtung in schematischer Perspektivansicht mit dem Dispersionsbereich 10, dem Kanal 20 und dem Injektionskanal 25. Der Aufbau und die Funktion der in Figur 4 gezeigten Ausführungsform der Erfindung entspricht im Wesentlichen den unter Bezug auf Figur 1 erläuterten Einzelheiten, wobei jedoch der Kanal 20 und die Stufe 11 des Dispersionsbereiches 10 im Raum anders ausgerichtet sind als im Fall von Figur 1. Die langgestreckte Querschnittsform des Kanals 20 erstreckt sich in z-Richtung, d. h. in vertikaler Richtung, während die Stufe 11 eine Querschnittserweiterung in horizontaler Richtung bildet. Es stellt einen wichtigen Vorteil der Erfindung dar, dass die Bildung der Emulsion im Wesentlichen unabhängig von der Gravitationswirkung und damit unabhängig von der Ausrichtung der Vorrichtung 100 im Raum ist. Auch bei dem System gemäß Figur 4 können nach der Destabilisierung der Strömungen an der Stufe 11 die Tropfen der dispergierten Phase (nicht dargestellt) abgeschnürt werden.

Wenn mit der erfindungsgemäßen Vorrichtung 100 eine Emulsion mit mehreren verschiedenen dispergierten Phasen gebildet werden soll, kann vorteilhafterweise ein Aufbau verwendet werden, der in schematischer Draufsicht in Figur 5 gezeigt ist. Die Vorrichtung 100 enthält wieder den Dispersionsbereich 10 mit der Stufe 11 im Kanal 20. In die Bodenfläche 21 des Kanals 20 münden drei Injektionskanäle 25.1, 25.2 und 25.3, durch die gleiche oder verschiedene Flüssigkeiten zur Bildung von mehreren dispergierten Phasen in dem Kanal 20 injizierbar sind. Die Ströme 4.1, 4.2 und 4.3 sind wie oben beschrieben in die Strömung 5 der Flüssigkeit für die kontinuierliche Phase eingebettet. Durch die gleichzeitige Tropfenabsehnürung an der Stufe 11 werden drei dispergierte Phasen gebildet, die bei Einstellung eines hohen Volumenanteils der Strömungen 4.1, 4.2 und 4.3 im Vergleich zur Strömung 5 lediglich durch dünne Lamellen der kontinuierlichen Phase voneinander getrennt sind. Der Aufbau gemäß Figur 5, der analog auch auf vier oder mehr Injektionskanäle erweitert werden kann, ermöglicht somit die gezielte Anordnung verschiedener Substanzen in benachbarten Tropfen (Kompartimenten) der dispergierten Phase in der Emulsion 1. Die mit der in Figur 5 abgebildeten Anordnung hergestellten Emulsionstropfen können je nach den eingestellten Flussvolumina der Ströme 4.1, 4.2 und 4.3 jeweils unterschiedliche Volumina einnehmen.

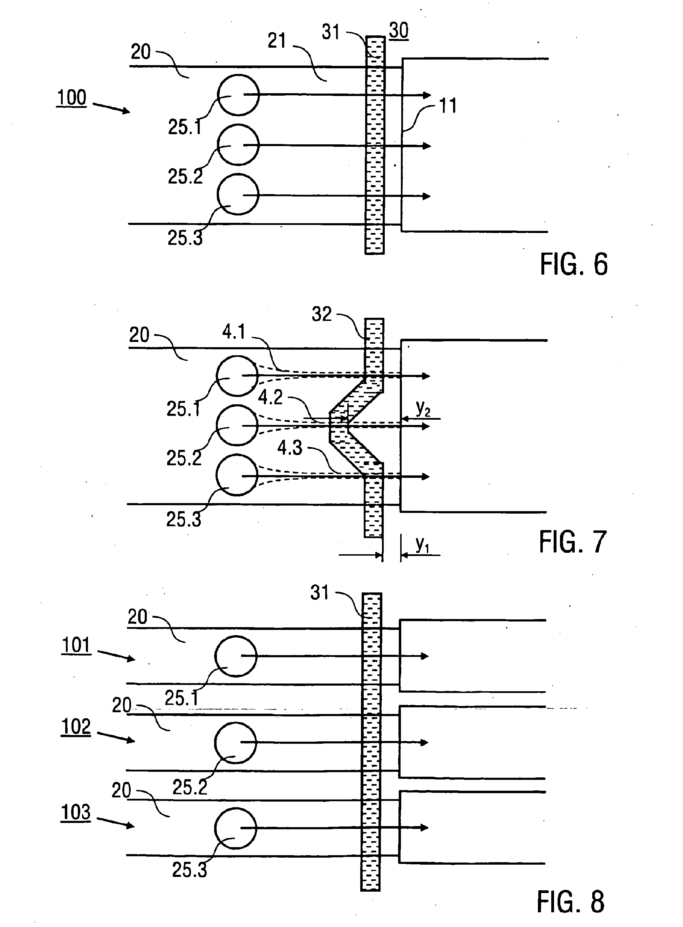

Bei der Bildung einer Emulsion mit mehreren dispergierten Phasen gemäß Figur 5 können die Tropfen der dispergierten Phasen durch Selbstorganisation eine regelmäßige geometrische Anordnung z. B. analog zu Figur 3C mit drei geraden Folgen von relativ zueinander versetzt angeordneten Tropfen bilden. Diese Selbstausrichtung wird insbesondere bei großen Volumenverhältnissen, also bei einem großen Anteil der dispergierten Phase in der Emulsion erreicht. Die gegenseitige Ausrichtung der Tropfen, insbesondere auch bei geringeren Volumenverhältnissen, kann durch eine Zeitsteuerung der Abschnürung der Tropfen verbessert werden, die im Folgenden unter Bezug auf die Figuren 6 bis 8 beschrieben wird.

Figur 6 zeigt eine Ausführungsform der erfindungsgemäßen Vorrichtung 100 analog zu Figur 5, wobei zusätzlich zur Zeitsteuerung der Tropfenbildung eine Synchronisationseinrichtung 30 vorgesehen ist. Die schematisch gezeigte Synchronisationseinrichtung 30 umfasst einen Heizstreifen 31, der senkrecht zur Strömungsrichtung im Kanal 20 verlaufend auf der Bodenfläche 21 angeordnet ist. Der Heizstreifen 31 ist z. B. zur Widerstandsheizung eingerichtet und besteht aus einem dünnen Streifen aus Metall oder einem anderen elektrisch leitfähigen Material. Die Breite des Heizstreifens 31 beträgt z. B. 2 bis 100 µm.

Der Heizstreifen 31 ist mit einer Steuerschaltung (nicht dargestellt) verbunden, mit welcher der Heizstreifen 31 mit elektrischen Strompulsen beaufschlagt wird. Durch die Strompulse wird eine lokale Erwärmung der Flüssigkeiten im Kanal 20 erreicht. Durch die lokale Erwärmung entsteht in den Flüssigkeiten ein sog. Marangoni-Transport (Konvektion auf der Grundlage des Marangoni-Effekts), durch den eine Synchronisation in der Tropfenabschnürung an der Stufe 11 bewirkt wird. Durch den Marangoni-Effekt wird die Grenzflächenspannung zwischen den verschiedenen Flüssigkeiten (z. B. zwischen den Öl- und Wasser-Phasen) räumlich und zeitlich moduliert. Die stetige Strömung von den Injektionskanälen 25.1, 25.2 und 25.3 zu der Stufe 11 wird damit durch eine oszillatorischen Fluss überlagert, der die Tropfenabschnürung beeinflusst. Die Erfinder haben festgestellt, dass die Frequenz der Tropfenabschnürung der Frequenz der Strompulse am Heizstreifen 31 entspricht. Da sich der Marangoni-Effekt im fluidischen Mikrosystem sehr stark auswirkt, genügen vorteilhafterweise geringe Heizströme mit einer Erwärmung um wenige Grad, um die beschriebene Synchronisation zu erreichen.

Wenn die Tropfen an der Stufe 11 gleichzeitig erzeugt werden sollen, ist der Heizstreifen 31 für alle Strömungsbereiche mit dem selben Abstand von der Stufe 11 angeordnet. Wenn die Tropfenerzeugung einem bestimmten Zeitschema folgen soll, kann gemäß Figur 7 eine Synchronisationseinrichtung mit einem modifizierten Heizstreifen 32 vorgesehen sein. Der Heizstreifen 32 weist einen gekrümmtem Verlauf auf, so dass die lokale Erwärmung für die äußeren Strömungen 4.1 und 4.3 mit einem geringeren Abstand y₁ erfolgt als für die mittlere Strömung 4.2, bei der die lokale Erwärmung mit größeren Abstand y₂ von der Stufe 11 vorgesehen ist. Die Abstände y₁ und y₂ betragen z. B. 100 µm und 200 µm. Im Ergebnis werden die Tropfen aus den Strömungen 4.1 und 4.3 zeitlich versetzt relativ zu den Tropfen der Strömung 4.2 erzeugt. Die Tropfen der dispergierten Phase ordnen sich relativ zueinander versetzt an und bilden eine sog. Honigwabenstruktur.

Die Zeitsteuerung der Emulsionsbildung der Synchronisationseinrichtung 30 kann nicht nur bei der Ausführungsform gemäß Figur 5, sondern auch beim Parallelbetrieb von mehreren Vorrichtungen 100, 101, 102 zur Bildung von Emulsionen von Vorteil sein, wie dies schematisch in Figur 8 illustriert ist. Die Tropfen der dispergierten Phase werden in den Kanälen 20 gemäß einem vorbestimmten Zeitschema gebildet, dass durch die pulsförmige Beaufschlagung des über alle drei Kanäle verlaufenden Heizstreifens 31 mit Heizströmen vorgegeben wird. Die Heizstreifen können für jeden Kanal getrennt ausgeführt sein und getrennt angesteuert werden. Damit ist eine variable, gezielt steuerbare Triggerung der Abschnürprozesse relativ zueinander möglich. Die Kanäle 20 können im weiteren Verlauf zu einem gemeinsamen Kanal zusammengeführt werden (siehe unten), in dem die dispergierten Phasen relativ zueinander eine vorbestimmte geometrische Ausrichtung aufweisen.

Die Synchronisation der Tropfenerzeugung ist insbesondere bei Anwendungen der Erfindung von Vorteil, bei denen die relative Position der Tropfen (Kompartimente) der dispergierten Phase gesteuert werden soll. Wenn z. B. mit zwei parallelen Injektionskanälen (analog zu Figur 5) eine Emulsion mit zwei dispergierten Phasen gemäß Figur 3C erzeugt wird, kann die Zusammensetzung, z. B. der pH-Wert von einer der beiden dispergierten Phasen kontinuierlich variiert werden. Der pH-Wert könnte sich schrittweise von Tropfen zu Tropfen über z. B. 100 Tropfen von pH = 3 auf pH = 11 vergrößern. Um das Ergebnis der Reaktion des Inhalts von Tropfen mit einer derart genau definierten Zusammensetzung reproduzierbar überwachen zu können, muss im weiteren Strömungsverlauf der Emulsion auch die Position der einzelnen Tropfen reproduzierbar feststellbar sein.

Die chemische Zusammensetzung der Flüssigkeit für die dispergierte Phase wird mit einer Stelleinrichtung (nicht dargestellt) gesteuert, die z. B. eine Kombination von Dosierpumpen oder Spritzenpumpen umfasst.

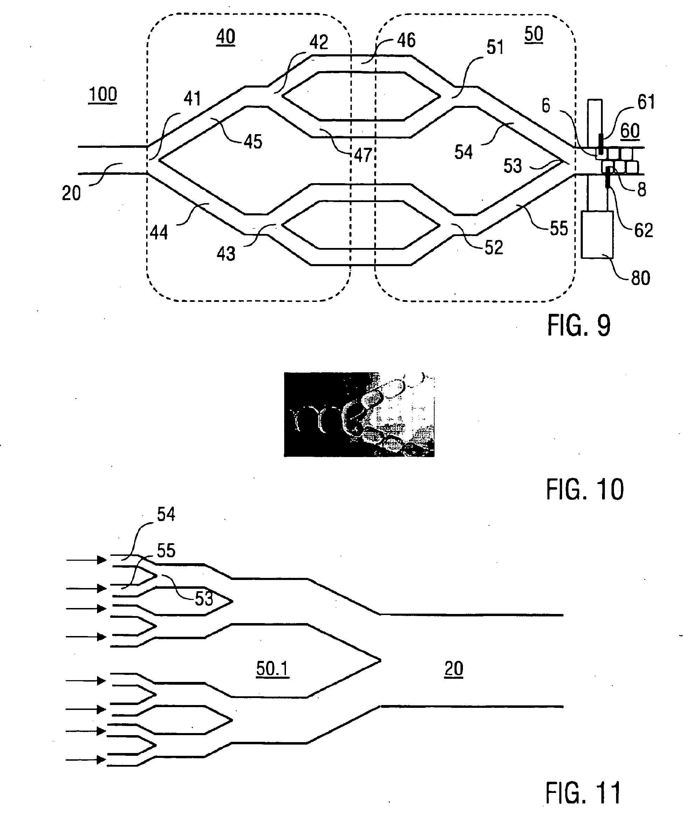

Erfindungsgemäß kann eine Umordnung der Tropfenfolgen vorgesehen sein, um für eine chemische Reaktion Tropfen mit vorbestimmten Zusammensetzungen in unmittelbare Nachbarschaft zu bringen. Die Umordnung kann mit Kanalstrukturen erreicht werden, die im Folgenden beispielhaft unter Bezug auf die Figuren 9 bis 13 beschrieben werden.

Gemäß Figur 9 ist der Kanal 20 der erfindungsgemäßen Vorrichtung 100 mit einer Teilereinrichtung 40 verbunden, die mehrere Kanalverzweigungen 41, 42 und 43 umfasst. Des Weiteren ist eine Verbindungseinrichtung 50 vorgesehen, an denen die Zweige des Kanals 20 an Verbindungen 51, 52 und 53 wieder zusammengeführt werden. Die Umordnung oder Manipulation einer Emulsion im Kanal 20 erfolgt in Abhängigkeit von der Tropfenanordnung vor dem Eintritt in die Teilereinrichtung 40 und der Länge der Zweige zwischen den Kanalverzweigungen 41, 42 und 43 und den Verbindungen 51, 52 und 53.

Wenn die Emulsion vor dem Eintritt in die Teilereinrichtung 40 zwei gerade Folgen von relativ zueinander versetzt angeordneten_ Tropfen (analog zu Figur 3C) umfasst, werden an der ersten Verzweigung 41 die beiden Tropfenfolgen voneinander getrennt. In den-Zweigen 44, 45 befinden sich dann jeweils eine einzelne Folge von hintereinander angeordneten Tropfen ("Bambus"-Struktur), die an den Verzweigungen 42 und 43 jeweils in Teiltropfen mit dem halben Volumen aufgeteilt werden. Diese Halbierung ist in der photographischen Darstellung der Figur 10 illustriert. Vorteilhafterweise kann gemäß einer abgewandelten Variante das Volumen des Tropfens abhängig von den Flussraten in den einzelnen Kanälen der Y-Verbindung ungleich auf zwei Tropfen aufgeteilt werden. In der Verbindungseinrichtung 50 werden die Teilemulsionen in den einzelnen Zweigen wieder zusammengeführt, wobei im Ergebnis zwei gerade Folgen mit relativ zueinander versetzt angeordneten Tropfen gebildet werden. Welche Tropfen zueinander benachbart sind, hängt von der Länge der Zweige 44, 45, 46, 47, 54 und 55 ab.

Wenn bereits vor Eintritt in die Teileeinrichtung 40 eine Emulsion mit der "Bambus"-Struktur gegeben ist, so werden deren Tropfen bereits an der ersten Verzweigung 41 halbiert, so dass entsprechend nach Durchlauf durch die Verbindungseinrichtung 50 eine Emulsion mit der "Zick-Zack"-Struktur gebildet wird, bei der die Volumen der Teiltropfen im Vergleich zu den Tropfen vor der Teilereinrichtung geviertelt sind.

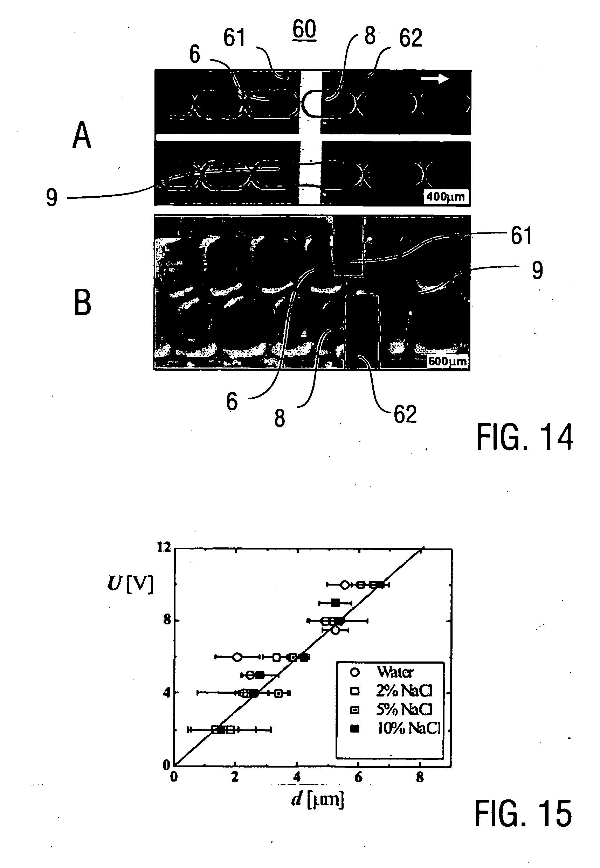

Eine Wechselwirkung zwischen benachbarten Tropfen 6, 8 einer erfindungsgemäß gebildeten Emulsion kann erreicht werden, indem die zwischen den Tropfen vorhandene Trennschicht der kontinuierlichen Phase durchbrochen wird. Hierzu kann eine Fusionseinrichtung 60 verwendet werden, die beispielhaft in den Figuren 9 und 14 illustriert ist. Die Fusionseinrichtung 60 umfasst zwei Elektroden 61, 62, die z. B. auf der Bodenfläche des Kanals 20 angeordnet und mit einer Steuerschaltung 80 (in Figur 14 nicht gezeigt) verbunden sind Bei der Passage von zwei Tropfen 6, 8, die zur Wechselwirkung gebracht werden sollen, an den Elektroden 61, 62, werden diese mit einem kurzen Spannungspuls beaufschlagt. Unter der Wirkung der elektrischen Spannung kommt es zum Durchbruch der Trennschicht zwischen den Tropfen 6, 8 und damit zu deren Verschmelzung. Die Wechselwirkung umfasst z. B. eine chemische Reaktion zwischen den in den Tropfen enthaltenen Substanzen oder eine Reaktion von biologischen Materialien, die in den Tropfen in suspendierter Form enthalten sind. Der zur Fusion von zwei benachbarten Tropfen angelegte Spannungspuls weist z. B. eine Amplitude von 2 V und eine Dauer von 10 ms oder 100 ms auf.

Gemäß Figur 14A werden die Elektroden 61, 62 durch elektrisch leitfähige Schichten gebildet, die in der Längsrichtung des Kanals (siehe Pfeil) hintereinander angeordnet sind, wobei zwischen den Elektroden ein geringfügiger Abstand vorgesehen ist. Der Abstand zwischen den Elektroden ist kleiner als die axiale Länge der Tropfen 6, 8 in Kanallängsrichtung. Im oberen Teil von Figur 14A ist gezeigt, wie die zu fusionierenden Tropfen 6, 8 an den Elektroden 61, 62 vorbeitreten. Wenn die Lamelle zwischen den Tropfen 6, 8 über dem Abstand angeordnet ist, d. h. wenn jeweils einer der Tropfen 6, 8 mit einer der Elektroden 61, 62 in Kontakt steht, werden die Elektroden 61, 62 mit einem Spannungspuls beaufschlagt. Im Ergebnis bildet sich der fusionierte Tropfen 9 gemäß dem unteren Teil von Figur 14A.

Gemäß Figur 14B ist eine entsprechende Elektrodenanordnung zur Fusionierung von Tropfen gezeigt, die im Kanal 20 benachbarte Tropfenreihen ("Zick-Zack"-Struktur) bilden. Wenn die zu fusionierenden Tropfen 6, 8 an den Elektroden 61, 62 auf einer Deckfläche des Kanals 20 vorbeitreten, werden diese mit dem Spannungspuls beaufschlagt, so dass der fusionierte Tropfen 9 gebildet wird. Die Elektroden 61, 62 werden durch elektrisch leitfähige Schichten gebildet, die in Längsausdehnung des Kanals 20 eine Breite kleiner als die Tropfenbreite aufweisen. Alternativ können drahtförmige Elektroden 61, 62 im Kanal 20, zum Beispiels auf einer oder mehreren von dessen Wänden angeordnet sein.

Der richtige Zeitpunkt der Beaufschlagung der Elektroden mit dem Spannungspuls kann durch eine Sensoreinrichtung (nicht dargestellt) ermittelt werden, mit der die jeweilige Position der Tropfen 6, 8 im Kanal 20 des Mikrosystems erfasst wird. Die Sensoreinrichtung kann z. B. auf einer elektrischen oder optischen Detektion der Tropfenposition basieren.

Figur 15 zeigt experimentelle Ergebnisse, die mit der Fusionseinrichtung gewonnen wurden. Die Amplitude (U) des Spannungspulses zur Fusion der Tropfen ist in Abhängigkeit vom Abstand der Tropfen, d. h. der Dicke der zwischen den Tropfen vorgesehenen Lamelle der kontinuierlichen Phase für verschiedene dispergierte Phasen gezeigt. Mit zunehmendem Abstand der dispergierten Tropfen ist eine zunehmende Spannungsamplitude zur Elektrokoaleszenz der Tropfen erforderlich, wobei jedoch vorteilhafterweise im interessierenden Bereich unterhalb eines Abstandes von 10 µm Spannungen unterhalb von 12 V zur Elektrokoaleszenz ausreichend sind. Wenn gemäß der oben genannten Ausführungsform der Erfindung eine elektrisch leitfähige Schicht auf den Boden- und/oder Deckflächen vorgesehen ist, wird diese in der Umgebung der Elektroden der Fusionseinrichtung unterbrochen.

Die Fusionseinrichtung 60 kann dahingehend modifiziert werden, dass anstelle der zwei gezeigten Elektroden 61, 62 ein oder mehrere Elektrodenarrays jeweils mit einer Vielzahl von Elektroden vorgesehen sind. Die Elektroden können auf wenigstens einer der Boden-, Deck- und Seitenflächen des Kanals 20 angeordnet sein. Die Ansteuerung der Elektroden kann in Abhängigkeit von der bei der konkreten Anwendung realisierten Tropfengröße ausgewählt werden.

Eine abgewandelte Variante einer Verbindungseinrichtung 50.1 zur mehrstufigen Zusammenführung einer Vielzahl von Emulsionen ist in schematischer Draufsicht in Figur 11 gezeigt. Die einzelnen Emulsionen fließen z. B. über die Zweige 54, 55 und Verbindungsstellen 53 zusammen (siehe Pfeilrichtung), bis im Kanal 20 eine im Wesentlichen zweidimensionale Anordnung der dispergierten Phasen erreicht ist. Es können z. B. 16 Reihen mit relativ zueinander versetzt angeordneten Tropfen im Kanal 20 parallel verlaufen. Diese Zusammenführung der Emulsionen kann z. B. für biochemische Anwendungen der Erfindung von Vorteil sein. Die Emulsion im Kanal 20 bildet ein Tropfenarray, das wie eine Substanzbibliothek z. B. mit optischen Mitteln ausgelesen werden kann.

Gemäß einer weiteren abgewandelten Variante einer Verbindungseinrichtung zur mehrstufigen Zusammenführung einer Vielzahl von Emulsionen kann eine dreidimensionale Anordnung der Tropfen gebildet werden. In diesem Fall verschmelzen die Zweige mit einzelnen Reihen von Tropfen oder mit einer zweidimensionalen Anordnung von Tropfen, z. B. gemäß Figur 11, an den Verbindungsstellen relativ zueinander mit einer vertikalen Ausrichtung.

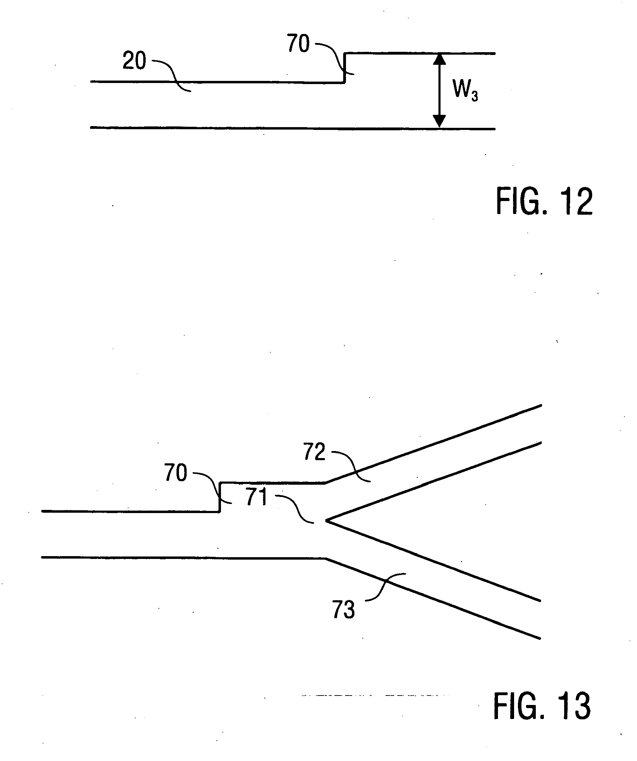

Die Umwandlung einer Emulsion mit einer geraden Folge hintereinander angeordneter Tropfen ("Bambus"-Struktur) in eine Emulsion mit zwei Reihen aus relativ zueinander versetzt angeordneten Tropfen ("Zick-Zack"-Struktur) ist schematisch in den Figuren 12 und 13 gezeigt. Eine erfindungsgemäß verwendete Positioniereinrichtung 70 wird durch eine zweite Kanalerweiterung gebildet, in der die Kanalbreite sich auf einen dritten Wert W₃ vergrößert. Die Kanalbreite W₃ entspricht z. B. der doppelten Kanalbreite W₂ vor der zweiten Kanalerweiterung. Die sich in Figur 12 von links durch den Kanal 20 bewegenden Tropfen bilden nach Passage der Positioniereinrichtung 70 ein Muster mit in Strömungsrichtung relativ zueinander versetzt angeordneten Tropfen ("Zick-Zack"-Struktur). Gemäß Figur 13 kann die Positioniereinrichtung 70 zusätzlich eine -le.r-z.weigu.ng-7-1---aufweisen-,--an der- di.e-.-Teilfolgen der umgeordneten Tropfen in verschiedene Zweige 72, 73 aufgetrennt werden.

Die in der vorstehenden Beschreibung, den Zeichnungen und den Ansprüchen offenbarten Merkmale der Erfindung können sowohl einzeln als auch in Kombination für die Verwirklichung der Erfindung in ihren verschiedenen Ausgestaltungen von Bedeutung sein.

## Patentansprüche

1. Verfahren zur Bildung einer Emulsion (1) mit mindestens einer dispergierten Phase (3) und einer kontinuierlichen Phase (2) in einem fluidischen Mikrosystem (100, 101, 102, 103), mit den Schritten:
- Bildung von Strömungen (4, 4.1, 4.2, 4.3, 5) aus verschiedenen Flüssigkeiten, die zu einem Dispersionsbereich (10) fließen, und
- Bildung der Emulsion (1) aus den Flüssigkeiten im Dispersionsbereich (10), wobei
- die Strömungen (4, 4.1, 4.2, 4.3, 5) durch einen gemeinsamen Kanal (20) zu dem Dispersionsbereich (10) laufen,
- die Strömungen (4, 4.1, 4.2, 4.3, 5) in einer ersten Bezugsrichtung nebeneinander angeordnet sind, und
- die Emulsion (1) beim Fließen der Flüssigkeiten über eine im Dispersionsbereich (10) vorgesehene Querschnittserweiterung (11) erzeugt wird,
**dadurch gekennzeichnet, dass**
- an der Querschnittserweiterung (11) der Querschnitt des Kanals (20) sich in einer zweiten Bezugsrichtung erweitert, die von der ersten Bezugsrichtung abweicht.

2. Verfahren nach Anspruch 1, bei dem die Emulsion (1) beim Fließen der Flüssigkeiten über eine im Dispersionsbereich (10) vorgesehene Stufe (11) erzeugt wird.

3. Verfahren nach Anspruch 2, bei dem eine oder mehrere der Strömungen (4, 4.1, 4.2, 4.3, 5) durch einen oder mehrere Injektionskanäle (25, 25.1, 25.2, 25.3) in den Kanal (20) eingespeist wird.

4. Verfahren nach mindestens einem der vorhergehenden Ansprüche, bei dem die mindestens eine dispergierte Phase (3) Tropfen (6) umfasst, deren Durchmesser geringer als 1000 µm, insbesondere geringer als 200 µm ist.

5. Verfahren nach mindestens einem der vorhergehenden Ansprüche, mit dem Schritt:
- Einstellung eines vorbestimmten Flussratenverhältnis, das einen Quotienten der Flussrate der Strömung (4) für die dispergierte Phase und der Flussrate der Strömung (5) für die kontinuierliche Phase darstellt.

6. Verfahren nach Anspruch 5, bei dem das Flussratenverhältnis im Bereich von 0.1 bis 0.9, insbesondere im Bereich von 0.5 bis 0.9 eingestellt wird.

7. Verfahren nach mindestens einem der vorhergehenden Ansprüche, mit dem Schritt:
- Variation der chemischen Zusammensetzung wenigstens einer der Flüssigkeiten.

8. Verfahren nach Anspruch 7, bei dem die mindestens eine dispergierte Phase (3) als Folge von Tropfen (6) gebildet wird, deren chemische Zusammensetzung variiert oder von denen jeder einen anderen pH-Wert aufweist.

9. Verfahren nach mindestens einem der vorhergehenden Ansprüche, bei dem die Emulsion (1) mehrere dispergierte Phasen (3) enthält, von denen jede eine Folge dispergierter Tropfen (6) umfasst.

10. Verfahren nach mindestens einem der vorhergehenden Ansprüche, mit dem Schritt:
- Aufteilung der Emulsion (1) in mindestens zwei Teilemulsionen (1.1, 1.2),
- Umordnung der Emulsion (1) von einem Zustand, in dem die dispergierte Phase eine gerade Folge von Tropfen bildet, in einen Zustand, in dem die dispergierte Phase mehrere Folge aus relativ zueinander versetzt angeordneten Tropfen bildet,
- Verschmelzung von zwei benachbarten Tropfen (7, 8) der mindestens einen dispergierten Phase (3), und/oder
- Synchronisation der Bildung von Tropfen (6) der mindestens einen dispergierten Phase'(3) in Abhängigkeit von mindestens einem Zeitschema.

11. Verfahren nach Anspruch 10, bei dem die Teilemulsionen (1.1, 1.2) nach der Aufteilung Tropfen umfassen, deren Volumen gleich dem oder kleiner als das Volumen der Tropfen der Emulsion (1) ist und/oder bei dem die Aufteilung der Emulsion (1) mehrstufig an mehreren Verzweigungen (41, 42, 43) erfolgt.

12. Verfahren nach Anspruch 10 oder 11, mit dem Schritt:
- Zusammenführung der Teilemulsionen (1.1, 1.2) zu einer gemeinsamen Emulsionsströmung.

13. Verfahren nach Anspruch 10, bei dem die Verschmelzung unter der Wirkung eines elektrischen Feldes, einer Lichtbestrahlung oder einer lokalen Erwärmung erfolgt, und/oder die Synchronisation eine Zeitsteuerung der Bildung von Tropfen von mehreren dispergierten Phasen (3) relativ zueinander und/oder eine zeitlich gesteuerte Erwärmung der Strömungen stromaufwärts vom Dispersionsbereich (10) umfasst.

14. Fluidisches Mikrosystem (100, 101, 102, 103) zur Bildung einer Emulsion (1) mit einer kontinuierlichen Phase (2) und mindestens einer dispergierten Phase (3), das umfasst:
- einen Dispersionsbereich (10) zur Bildung der Emulsion (1) aus verschiedenen Flüssigkeiten, und
- einen Kanal (20), der zu dem Dispersionsbereich (10) führt, wobei
- der Kanal (20) dazu eingerichtet ist, dass Strömungen (4, 4.1, 4.2, 4.3, 5) der Flüssigkeiten in dem Kanal (20) in einer ersten Bezugsrichtung nebeneinander verlaufen, und
- der Kanal (20) im Dispersionsbereich (10) eine Querschnittserweiterung (11) aufweist,
**dadurch gekennzeichnet, dass**
- an der Querschnittserweiterung (11) der Querschnitt des Kanals (20) sich in einer zweiten Bezugsrichtung erweitert, die von der ersten Bezugsrichtung abweicht.

15. Mikrosystem nach Anspruch 14, bei dem die Querschnittserweiterung eine Stufe (11) umfasst.

16. Mikrosystem nach Anspruch 14 oder 15, bei dem der Kanal (20) ein Aspektverhältnis (W₁/H₁) aus einer Breite (W₁) parallel zur ersten Bezugsrichtung und einer relativ zur ersten Bezugsrichtung senkrechten Höhe (H₁) aufweist, das im Bereich von 100:1 bis 2:1 gewählt ist.

17. Mikrosystem nach mindestens einem der Ansprüche 14 bis 16, bei dem mit dem Kanal (20) ein oder mehrere Injektionskanäle (25, 25.1, 25.2, 25.3) verbunden sind, durch den/die eine oder mehrere der Strömungen (4) in den Kanal (20) eingespeist werden können.

18. Mikrosystem nach mindestens einem der Ansprüche 14 bis 17, das
- eine Dosiereinrichtung zur Einstellung eines vorbestimmten Flussratenverhältnis der Strömungen (4, 4.1, 4.2, 4.3, 5),
- eine Stelleinrichtung zur Variation der chemischen Zusammensetzung wenigstens einer der Flüssigkeiten,
- eine Teilereinrichtung (40) mit mindestens einer Verzweigung (41, 42, 43) zur Aufteilung der Emulsion (1) in mindestens zwei Teilemulsionen,
- mindestens eine Fusionseinrichtung (60) zur Verschmelzung von zwei benachbarten Tropfen (6, 8) der mindestens einen dispergierten Phase (3), und/oder
- mindestens eine Synchronisationseinrichtung (30) zur Synchronisation der Bildung von Tropfen der mindestens einen dispergierten Phase (3) in Abhängigkeit von mindestens einem Zeitschema aufweist.

19. Mikrosystem nach Anspruch 18, bei dem die Teilereinrichtung (40) mehrere Verzweigungen (41, 42, 43) zur mehrstufigen Aufteilung der Emulsion (1) aufweist.

20. Mikrosystem nach Anspruch 18 oder 19, das eine Verbindungseinrichtung (50) zur Zusammenführung der Teilemulsionen zu einer gemeinsamen Emulsionsströmung aufweist.

21. Mikrosystem nach Anspruch 18, bei dem die Fusionseinrichtung (60) Elektroden (61, 62) zur Erzeugung eines elektrischen Feldes, eine Lichtquelle oder eine Heizeinrichtung umfasst.

22. Mikrosystem nach Anspruch 18, bei dem die Synchronisationseinrichtung (30) eine Heizeinrichtung (31) aufweist, die im Kanal (20) angeordnet ist. '

## Claims

1. A method for forming an emulsion (1) including at least one dispersed phase (3) and a continuous phase (2) in a fluidic microsystem (100, 101, 102, 103), said method comprising the steps:
- forming flows (4, 4.1, 4.2, 4.3, 5) of different liquids which flow towards a dispersion region (10), and
- forming the emulsion (1) from the liquids in the dispersion region (10), wherein
- the flows (4, 4.1, 4.2, 4.3, 5) run through a common channel (20) to the dispersion region (10),
- the flows (4, 4.1, 4.2, 4.3, 5) are arranged next ozone another relative to a first reference direction, and
- the emulsion (1) is produced as the liquids flow through a cross-sectional widening (11) provided in the dispersion region (10),
**characterized in that**
- at the cross-sectional widening (11) the cross section of the channel (20) widens in a second reference direction different from the first reference direction.

2. The method according to claim 1, in which the emulsion (1) is produced as the liquids flow over a step (11) provided in the dispersion region (10).

3. The method according to claim 2, in which at least one of the flows (4, 4.1, 4.2, 4.3, 5) is fed into the channel (20) through at least one injection channel (25, 25.1, 25.2, 25_{:}3).

4. The method according to at least one of the preceding claims, in which the at least one dispersed phase (3) comprises droplets (6), the diameter of which is less than 1000 µm, in particular less than 200 m.

5. The method according to at least one of the preceding claims, comprising the step:
- setting a predefined flow rate ratio which is a quotient of the flow rate of the flow (4) for the dispersed phase and of the flow rate of the flow (5) for the continuous phase.

6. The method according to claim 5, in which the flow rate ratio is set in the range from 0.1 to 0.9, in particular in the range from 0.5 to 0.9.

7. The method according to at least one of the preceding claims, comprising the step:
- varying the chemical composition of at least one of the liquids.

8. The method according to claim 7, in which the at least one dispersed phase (3) is formed as a succession of droplets (6), the chemical composition of which varies or each of which having a different pH value.

9. The method according to at least one of the preceding claims, in which the emulsion (1) contains a plurality of dispersed phases (3), each of which comprises a succession of dispersed droplets (6).

10. The method according to at least one of the preceding claims, comprising the step:
- splitting the emulsion (1) into at least two sub-emulsions (1.1, 1.2),
- rearranging the emulsion (1) from a state in which the dispersed phase forms a simple succession of droplets to a state in which the dispersed phase forms a plurality of successions of droplets which are offset relative to one another,
- fusing two adjacent droplets (7, 8) of the at least one dispersed phase (3), and/or
- synchronizing the formation of droplets (6) of the at least one dispersed phase (3) as a function of at least one time schedule.

11. The method according to claim 10, in which the sub-emulsions (1.1, 1.2) after splitting comprise droplets having a volume that is equal to or smaller than the volume of the droplets of the emulsion (1) and/or the splitting of the emulsion (1) takes place in multiple stages at a plurality of branchings (41, 42, 43).

12. The method according to claim 10 or 11, comprising the step:
- combining the sub-emulsions (1.1, 1.2) to form a common emulsion flow.

13. The method according to claim 10, in which the fusion takes place under the effect of an electric field, irradiation with light or local heating, and/or
the synchronization comprises a time control of the formation of droplets of a plurality of dispersed phases (3) relative to one another and/or a temporally controlled heating of the flows upstream of the dispersion region (10).

14. A fluidic microsystem (100, 101, 102, 103) for forming an emulsion (1) including a continuous phase (2) and at least one dispersed phase (3), comprising:
- a dispersion region (10) for forming the emulsion (1) from different liquids, and
- a channel (20) which leads to the dispersion region (10), wherein
- the channel (20) is adapted such that flows (4, 4.1, 4.2, 4.3, 5) of the liquids in the channel (20) run next to one another relative to a first reference direction, and
- the channel (20) has in the dispersion region (10) a cross-sectional widening (11),
**characterized in that**
- at the cross-sectional widening (11) a cross section of the channel (20) widens in a second reference direction different from the first reference direction.

15. The microsystem according to claim 14, in which the cross-sectional widening comprises a step (11).

16. The microsystem according to claim 14 or 15, in which the channel (20) has an aspect ratio (W₁/H₁), calculated from a width (W¹) parallel to the first reference direction and a height (H₁) perpendicular to the first reference direction, which is selected in the range from 100:1 to 2:1.

17. The microsystem according to at least one of claims 14 to 16, in which at least one injection channel (25, 25.1, 25.2, 25.3) is connected to the channel (20), through which injection channel at least one of the flows (4) can be fed into the channel (20).

18. The microsystem according to at least one of claims 14 to 17, which has
- a dosing device for setting a predefined flow rate ratio of the flows (4, 4.1, 4.2, 4.3, 5), .
- an adjusting device for varying a chemical composition of at least one of the liquids
- a splitter device (40) with at least one branching (41, 42, 43) for splitting the emulsion (1) into at least two sub-emulsions
- at least one fusion device (60) for fusing two adjacent droplets (6, 8) of the at least one dispersed phase (3), and/or
- at least one synchronization device (30) for synchronizing the formation of droplets of the at least one dispersed phase (3) as a function of at least one time schedule.

19. The microsystem according to claim 18, in which the splitter device (40) has a plurality of branchings (41, 42, 43) for splitting the emulsion (1) in multiple stages.

20. The microsystem according to claim 18 or 19, which has a joining device (50) for combining the sub-emulsions to form a common emulsion flow.

21. The microsystem according to claim 18, in which the fusion device (60) comprises electrodes (61, 62) for generating an electric field, a light source or a heating device.

22. The microsystem according to claim 18, in which the synchronization device (30) has a heating device (31) which is arranged in the channel (20).

## Revendications

1. Procédé de formation d'une émulsion (1) comprenant au moins une phase dispersée (3) et une phase continue (2) dans un système microfluidique (100, 101, 102, 103), comprenant les étapes consistant à :
- former des courants (4, 4.1, 4.2, 4.3, 5) composés de différents liquides, qui s'écoulent dans une zone de dispersion (10), et
- former l'émulsion (1) constituée des liquides dans la zone de dispersion (10), où
- les courants (4, 4.1, 4.2, 4.3, 5) s'écoulent à travers un canal commun (20) dans la zone de dispersion (10),
- les courants (4, 4.1, 4.2, 4.3, 5) sont disposés l'un à côté de l'autre dans une première direction de référence, et
- l'émulsion (1) est produite lors de l'écoulement des liquides à travers un élargissement transversal (11) prévu dans la zone de dispersion (10),
**caractérisé en ce que**
- au niveau de l'élargissement transversal (11), la section transversale du canal (20) s'élargit dans une deuxième direction de référence, qui est différente de la première direction de référence.

2. Procédé selon la revendication 1, dans lequel l'émulsion (1) est produite lors de l'écoulement des liquides à travers une marche (11) prévue dans la zone de dispersion (10).

3. Procédé selon la revendication 2, dans lequel un ou plusieurs courants (4, 4.1, 4.2, 4.3, 5) est ou sont envoyés dans le canal (20) par un ou plusieurs canaux d'injection (25, 25.1, 25.2, 25.3).

4. Procédé selon au moins l'une des revendications précédentes, dans lequel la au moins une phase dispersée (3) comprend des gouttes (6), dont le diamètre est inférieur à 1000 µm, en particulier inférieur à 200 µm.

5. Procédé selon au moins l'une des revendications précédentes, comprenant l'étape consistant à .
- régler un ratio de débit prédéterminé, qui représente un quotient du débit du courant (4) pour la phase dispersée et du débit du courant (5) pour la phase continue.

6. Procédé selon la revendication 5, dans lequel le ratio de débit est réglé dans la plage allant de 0,1 1 à 0,9, en particulier dans la plage de 0,5 à 0,9.

7. Procédé selon au moins l'une des revendications précédentes, comprenant l'étape consistant à :
- varier la composition chimique d'au moins un des liquides.

8. Procédé selon la revendication 7, dans lequel la au moins une phase dispersée (3) est formée d'une série des gouttes (6), dont la composition chimique varie ou dont chacune présente un pH différent.

9. Procédé selon au moins l'une des revendications précédentes, dans lequel l'émulsion (1) comprend plusieurs phases dispersées, dont chacune comprend une série de gouttes dispersées (6).

10. Procédé selon au moins l'une des revendications précédentes, comprenant l'étape consistant à :
- diviser l'émulsion (1) en au moins deux émulsions partielles (1.1, 1.2),
- faire passer l'émulsion (1) d'un état, dans lequel la phase dispersée forme une série linéaire de gouttes, à un état, dans lequel la phase dispersée forme plusieurs séries de gouttes disposées en décalage les unes par rapport aux autres,
- fusionner les deux gouttes adjacentes (7, 8) à la au moins une phase dispersée (3), et/ou
- synchroniser la formation des gouttes (6) de la au moins une phase dispersée (3) en fonction d'au moins un schéma temporel. ,

11. Procédé selon la revendication 10, dans lequel les émulsions partielles (1.1, 1.2) après leur division comprennent des gouttes dont le volume est égal ou inférieur au volume des gouttes de l'émulsion (1) et/ou dans lequel la division de l'émulsion (1) s'effectue au niveau de plusieurs ramifications (41, 42, 43) en plusieurs étapes.

12. Procédé selon la revendication 10 ou 11, comprenant l'étape consistant à :
- rassembler les émulsions partielles (1.1, 1.2) en un courant d'émulsion commun.

13. Procédé selon la revendication 10, dans lequel la fusion s'effectue sous l'action d'un champ électrique, d'une irradiation lumineuse ou d'un réchauffement local, et/ou la synchronisation comprend une régulation temporelle de la formation des gouttes de plusieurs phases dispersées (3) les unes par rapport aux autres et/ou un réchauffement régulé temporellement des courants en amont de la zone de dispersion (10).

14. Système microfluidique (100, 101, 102, 103) destiné à la formation d'une émulsion (1) constituée d'une phase continue (2) et d'au moins une phase dispersée (3), qui comprend :
- une zone de dispersion (10) pour la formation de l'émulsion (1) constituée de différents liquides, et ,
- un canal (20) qui conduit à la zone de dispersion (10), où
- le canal (20) est conçu de manière que les courants (4, 4.1, 4.2, 4.3, 5) de liquides s'écoulent l'un à côté de l'autre dans le canal (20) dans une première direction de référence, et '
- le canal (20) présente dans la zone de dispersion (10) un élargissement transversal (11),
**caractérisé en ce que**
- au niveau de l'élargissement transversal (11), la section transversale du canal (20) s'élargit dans une deuxième direction de référence, qui est différente de la première direction de référence.

15. Système microfluidique selon la revendication 14, dans lequel l'élargissement transversal comprend une marche (11) . _

16. Système microfluidique selon la revendication 14 ou 15, dans lequel le canal (20) présente un ratio d'aspect (Wi/H1) constitué d'une largeur (W₁) parallèle à la première direction de référence et une hauteur (H₁) perpendiculaire à la première direction de référence, qui est choisi dans la plage allant de 100/1 à 2/1.

17. Système microfluidique selon au moins l'une des revendications 14 à 16, dans lequel un ou plusieurs canaux d'injection (25, 25.1, 25.2, 25.3), à travers lequel/lesquels un ou plusieurs courants (4) peut ou peuvent être envoyés dans le canal (20), sont reliés au canal (20).

18. Système microfluidique selon au moins l'une des revendications 14 à 17, qui comprend .
- un dispositif de dosage pour régler un ratio de débit prédéterminé des courants (4, 4.1, 4.2, 4.3, 5),
- un dispositif de réglage pour faire varier la composition chimique d'au moins un des liquides,
- un dispositif de répartition (40) comprenant au moins une ramification (41, 42, 43) pour diviser l'émulsion (1) en au moins deux émulsions partielles, '
- au moins un dispositif de fusion (60) pour fusionner deux gouttes adjacentes (6, 8) à la au moins une phase dispersée (3), et/ou
- au moins un dispositif de synchronisation (30) pour synchroniser la formation des gouttes de la au moins une phase dispersée (3) en fonction d'au moins un schéma temporel.

19. Système microfluidique selon la revendication 18, dans lequel le dispositif de répartition (40) comprend plusieurs ramifications (41, 42, 43) pour la division multi-étape de l'émulsion (1).

20. Système microfluidique selon la revendication 18 ou 19, qui comprend un dispositif de raccordement (50) pour rassembler les émulsion partielles en un courant d'émulsion commun.

21. Système microfluidique selon la revendication 18, dans lequel le dispositif de fusion (60) comprend des électrodes (61, 62) destinées à la production d'un champ électrique, d'une source lumineuse ou d'un dispositif de chauffage.

22. Système microfluidique selon la revendication 18, dans lequel le dispositif de synchronisation (30) présente un dispositif de chauffage (31), qui est disposé dans le canal (20).
